# EUROPÄISCHE PATENTSCHRIFT

(11) **EP 2 487 056 B1**
(45) Veröffentlichungstag und Bekanntmachung des Hinweises auf die Patenterteilung: **14.09.2016**
(21) Anmeldenummer: 12400002.7
(22) Anmeldetag: 18.01.2012
(51) Int. Cl.: B60G 17/016, B60G 17/0195, B62D 6/06, B62D 6/00

(54) **Verfahren und Vorrichtung zum Beeinflussen des Kurvenfahrverhaltens eines Kraftwagens sowie Kraftwagen**
Method and device for influencing the cornering behaviour of a vehicle as well as vehicle
Procédé et dispositif d'influence du comportement en virage d'un véhicule ainsi que véhicule

(30) Priorität: 10.02.2011 DE 102011010845
(43) Veröffentlichungstag der Anmeldung: 15.08.2012
(73) Patentinhaber: Audi AG, 85045 Ingolstadt (DE)
(72) Erfinder: Bär, Michael, 85049 Ingolstadt (DE); Meitinger, Karl-Heinz, 81667 München (DE)
(74) Vertreter: Thielmann, Frank

(56) Entgegenhaltungen:
- EP-A2- 1 197 409
- EP-A2- 2 233 332
- WO-A1-2006/037678
- DE-A1- 10 060 536
- DE-A1- 10 226 683
- DE-A1- 10 235 026
- US-A- 4 905 783
- US-A1- 2002 007 239
- US-A1- 2003 122 417
- US-A1- 2004 060 765
- US-A1- 2004 117 085
- US-A1- 2005 228 565
- US-B1- 6 339 739

## Beschreibung

Die Erfindung betrifft ein Verfahren sowie eine Vorrichtung zum Beeinflussen des Kurvenfahrverhaltens eines Kraftwagens. Sie betrifft auch einen Kraftwagen mit einer solchen Vorrichtung.

Unter dem Begriff Active Body Control (ABC) sind Kraftfahrzeuge mit aktiven Federungssystemen bzw. Stabilisatoren bekannt, deren steuerbare Fahrwerkseigenschaften einen gezielten Ausgleich von Nick- und Wankbewegungen ermöglicht. Üblicherweise lässt sich hierzu die vertikale Position eines jeden Rades elektrohydraulisch verstellen. Hierdurch lassen sich die Fahreigenschaften eines Kraftwagens insbesondere bei Kurvenfahrt verbessern, z. B. indem sich der Kraftwagen aktiv in die Kurve legt.

Aus der EP 2 233 332 A2 ist ein Verfahren zur Ansteuerung von Aktoren eines aktiven Federungssystems bekannt, mithilfe dessen sich der Wankwinkel eines Kraftfahrzeugs gezielt beeinflussen lässt. Die einzelnen Aktoren, die die vertikale Radstellung der einzelnen Räder bestimmen, werden so angesteuert, dass eine Wankbewegung des Fahrzeugs zur Kurveninnenseite erzeugt wird. Im Falle einer teil- oder vollautomatischen Fahrzeugführung wird die auf die Fahrzeuginsassen wirkende Querkraft automatisch so reduziert, dass sich ein komfortables Fahrgefühl einstellt. Mittels einer Streckenvorausschau in der automatischen Fahrt lässt sich hierbei die Querbeschleunigung vorausberechnen und die Wankbewegung des Fahrzeugs entsprechend anpassen.

Aus der DE 10 2006 033 635 A1 ist ein Verfahren zur Stabilisierung eines Fahrzeugs unter Berücksichtigung der Fahrzeugquerdynamik bekannt. Aus dem Fahrerwunsch wird eine die Querdynamik des Fahrzeugs beeinflussende Sollgröße ermittelt, aus einem Vergleich der Sollgröße mit einer korrespondierenden Zustandsgröße eine Stellgröße errechnet und die Stellgröße mindestens einem Aktuator im Fahrzeug zugeordnet. Die Stellgröße ist ein in einem Überlagerungstriebe im Fahrzeug erzeugbarer Überlagerungslenkwinkel, wobei als Zustandsgröße die Quergeschwindigkeit des Fahrzeugs herangezogen wird. Ein aktives Wanken erfolgt nicht.

Die DE 10 2008 041 417 A1 beschreibt eine elektrische Servolenkung mit einem Servermotor, wobei der Servermotor von einer Steuer- und Regelungseinrichtung angesteuert wird. Durch die Steuer und Regelungseinrichtung wird auch ein elektrischer Aktuator für ein Wankstabilisierungssystem des Fahrzeugs angesteuert.
Aus der DE 101 41 273 A1 ist ein Verfahren zur Erhöhung der Fahrstabilität bei einem Fahrzeug bekannt, welches durch einen Regeleingriff am Fahrzeug ein einer Fahrzeuginstabilität entgegenwirkendes Giermoment bewirkt. Das Maß des Regeleingriffs ist von einem Reglerkommando abhängig, welches in Abhängigkeit von der Differenz aus dem Quotienten von Fahrzeugschwerbeschleunigung und Fahrzeuggeschwindigkeit einerseits und der tatsächlich auftretenden Gierrate andererseits bestimmt wird. Eine Wankbewegung wird nicht gezielt herbeigeführt.

Die DE 40 31 317 A1 beschreibt ein System zur Verbesserung der Wankdynamik eines Kraftfahrzeugs durch Beeinflussungen der Lenksysteme des Kraftfahrzeugs. Ziel ist eine optimale Dämpfung der Wankbewegungen und eine Verbesserung der Wankdynamik.

Wankbewegungen bei Kurvenfahrt haben den Nachteil, dass diese üblicherweise auf das Kurvenfahrverhalten des Kraftwagens rückwirken. Insbesondere werden bei dem aus der EP 2 233 332 A2 bekannten aktiven Wanken die Achsen des Kraftwagens in einem ungünstigen Arbeitspunkt betrieben, so dass sich ein eindrehendes Kurvenfahrverhalten des Kraftwagens ergibt, das üblicherweise durch eine manuelle Lenkbewegung des Fahrzeugführers ausgeglichen werden muss.

Die US 2005/0228565 A1, die als nächstliegender Stand der Technik betrachtet wird, offenbart Regelsysteme wie ESP, AFS (active front steering) und ARC (active roll compansation). Die US 2005/228565 beschreibt ein Verfahren, das bekannte Regelsysteme, wie ESP, AFS (active front steering) und ARC (active roll compansation), kombiniert und koordiniert, so dass sich die einzelnen Systeme nicht gegenseitig blockieren. Dieses Verfahren ist so ausgelegt, dass das Fahrzeug in kritischen Fahrsituationen stabilisiert wird.

Die DE 102 26 683 A1 beschreibt ein Verfahren zur Beeinflussung des Fahrverhaltens eines Fahrzeugs. Dabei wird ein Soll-Giermoment ermittelt und daraufhin zunächst ein Fahrwerksystem, dann ein Lenksystem und dann ein Bremssystem angesteuert, um eine Abweichung zwischen einem Soll-Fahrverhalten und einem Ist-Fahrverhalten zu minimieren. Die erreichte Minimierung der Abweichung in vorhergehenden Systemen wird anschließend bei der Ansteuerung der nachfolgenden Systeme berücksichtigt.

Es ist Aufgabe der Erfindung ein Verfahren sowie eine Vorrichtung bereitzustellen, mit dem bzw. mit der sich der Fahrkomfort für die Insassen des Kraftwagens verbessern lässt und mit dem bzw. mit der sich ein natürliches Lenkverhalten des Kraftwagens bei Kurvenfahrt ergibt.

Diese Aufgabe wird durch ein Verfahren mit den Merkmalen des Patentanspruchs 1, eine Vorrichtung, welche die Merkmale des Patentanspruchs 9 aufweist, sowie einen Kraftwagen mit den Merkmalen des Patentanspruchs 10 gelöst.

Mit dem erfindungsgemäßen Verfahren lässt sich das Kurvenfahrverhalten eines Kraftwagens beeinflussen. Das Verfahren umfasst die folgenden Verfahrensschritte:
a) Es wird eine Querbeschleunigung des Kraftwagens bestimmt. Die Bestimmung kann beispielsweise dadurch erfolgen, dass die aktuelle bzw. momentan auftretende Querbeschleunigung messtechnisch erfasst wird. Es kann auch vorgesehen sein, dass die Querbeschleunigung des Kraftwagens für einen in der Zukunft liegenden Zeitpunkt vorausbestimmt wird. Dies kann beispielsweise mithilfe geeigneter Fahrzeugmodelle durch Berechnung und/oder im Rahmen einer bereitgestellten Streckenvorausschau geschehen. Es kann auch eine zu erwartende Querbeschleunigung mithilfe vorhandener Daten geschätzt werden.
b) Festlegen einer Sollquerneigung des Kraftwagens in Abhängigkeit von der in Schritt a) bestimmten Querbeschleunigung. Unter Querneigung ist insbesondere eine Drehung des Kraftwagens um seine Wankachse zu verstehen. Solche Drehbewegungen, die auch als Rollen bezeichnet werden, treten insbesondere bei Kurvenfahrt des Kraftwagens auf, bei denen Querbeschleunigungen aufgrund der Zentrifugalkraft ein Drehen bzw. ein Neigen des Kraftwagens bewirken. Die Sollquerneigung kann dann insbesondere so festgelegt werden, dass sich bei einer Drehung des Kraftwagens um die Wankachse für die Insassen des Kraftwagens ein besonders angenehmes und weitestgehend ungestörtes Fahrempfinden ergibt. Dies ist insbesondere dann der Fall, wenn die auf die Insassen wirkenden subjektiv empfundenen Querbeschleunigungen zumindest teilweise kompensiert werden. Es kann insbesondere auch ein Sollquerneigungsverlauf festgelegt werden. Dies kann in Abhängigkeit von der in Schritt a) bestimmten Querbeschleunigung geschehen. Ohne Querbeschleunigungen auf den Kraftwagen hat dieser insbesondere einen Querneigungswinkel von 0°. Treten dagegen Querbeschleunigungen am Kraftwagen auf, ist dieser Querneigungswinkel von 0° verschieden. Die Sollquerneigung kann insbesondere eine Funktion der Querbeschleunigung sein. Der funktionale Zusammenhang kann beispielsweise durch abgelegte Kennlinien oder mathematische Gleichungen gegeben sein.
c) Einstellen wenigstens eines Aktors einer aktiven Fahrwerksvorrichtung des Kraftwagens, so dass der Kraftwagen die in Schritt b) ermittelte Sollquerneigung einnimmt. Bei den Aktoren der aktiven Fahrwerksvorrichtung kann es sich insbesondere um elektrohydraulische Stellvorrichtungen handeln, welche an den einzelnen Rädern des Kraftwagens angreifen und deren Vertikalposition steuern. Die aktive Fahrwerksvorrichtung kann ein aktives Federungssystem, z. B. ein Active Body Control System und/oder ein System mit aktiven Stabilisatoren sein. Die einzelnen Aktoren der jeweiligen Räder lassen sich insbesondere so ansteuern, dass nur bestimmte Räder angehoben bzw. abgesenkt werden, so dass sich die vorgegebene Sollquerneigung des Kraftwagens einstellt.
d) Einstellen wenigstens eines Aktors, welcher einen Lenkeingriff in eine Lenkvorrichtung des Kraftwagens bewirkt, dergestalt, dass eine durch das Einstellen des wenigstens einen Aktors der aktiven Fahrwerksvorrichtung bewirkte Gierbewegung des Kraftwagens zumindest teilweise kompensiert wird. Durch das Einstellen des wenigstens einen Aktors in Schritt c) kann gegebenenfalls nicht nur das Wanken, sondern auch das Kurvenfahrverhalten des Kraftwagens beeinflusst werden. Dann kann durch Einstellen des wenigstens einen Aktors, der den Eingriff in die Lenkvorrichtung bewirkt, erreicht werden, dass diese Beeinflussung des Kurvenfahrverhaltens zumindest teilweise, insbesondere vollständig, kompensiert wird.

Mit dem Verfahren kann erreicht werden, dass sich ein Kraftwagen aktiv in eine gefahrene Kurve neigt. Die auf die Fahrzeuginsassen unangenehm wirkenden Querbeschleunigungen lassen sich so reduzieren. Der Fahrkomfort steigt subjektiv erheblich. Zudem kann sichergestellt werden, dass sich das gewohnte bzw. nahezu unveränderte Lenkverhalten des Kraftwagens bei Kurvenfahrt einstellt. Das aktiv hervorgerufene Wanken des Kraftwagens führt dann zu keinen oder nur unerheblichen Veränderungen des Kurvenfahrverhaltens des Kraftwagens, so dass kein oder nur ein unerhebliches Gegensteuern durch den Fahrzeugführer erforderlich ist. Insbesondere bleibt das gewohnte Lenkverhalten des Kraftwagens nahezu unverändert bestehen. Fahrkomfort und Fahrsicherheit werden erhöht und der Fahrzeugführer erhält die ihm vertrauten haptischen Rückmeldungen durch das Lenkrad.

In Schritt d) wird durch das Einstellen des wenigstens einen Aktors, welcher den Eingriff in die Lenkvorrichtung des Kraftwagens bewirkt, einem ersten Lenkwinkel ein Überlagerungslenkwinkel so überlagert, dass der durch den resultierenden Lenkwinkel bewirkte Kurvenradius der Fahrkurve des Kraftwagens dem Kurvenradius der Fahrkurve des Kraftwagens entspricht, welcher sich ohne das Einstellen des wenigstens einen Aktors der aktiven Fahrwerksvorrichtung bei dem ersten Lenkwinkel ergeben hätte. Es wird also über einen Lenkaktor aktiv in die Lenkbewegung des Kraftwagens eingegriffen. Hierbei kann ein üblicherweise sowieso vorhandenes Lenksystem des Kraftwagens verwendet werden und nur durch zusätzliche Aktoren zum aktiven Lenkeingriff ergänzt werden. Die durch ein aktives Wanken hervorgerufene zusätzliche Gierbewegung des Kraftwagens bei Kurvenfahrt muss dann nicht mehr durch einen Fahrzeugführer durch manuelles Gegenlenken ausgeglichen werden, sondern durch den Lenkaktor erfolgt dieser Eingriff automatisch. Für den Fahrzeugführer ergibt sich dann das ihm vertraute Lenkverhalten des Kraftwagens bei Kurvenfahrt. Die Notwendigkeit eines als störend empfundenen und die Verkehrsicherheit beeinträchtigenden manuellen Gegenlenkens entfällt.

Der erste Lenkwinkel, dem der Überlagerungslenkwinkel überlagert wird, kann hierbei zumindest teilweise durch einen Fahrzeugführer manuell vorgegeben werden. Alternativ oder zusätzlich kann vorgesehen sein, dass dieser erste Lenkwinkel durch eine Vorrichtung zur teilautomatischen Fahrzeugfüh rung, insbesondere eine Spurhalteunterstützungsvorrichtung, vorgegeben wird. Es kann auch eine autonome bzw. vollautomatische Fahrzeugführung vorgesehen sein, bei der der Fahrzeugführer nicht mehr aktiv in die Fahrzeuglenkung eingreift. Besonders vorteilhaft ist die Erfindung jedoch dann, wenn der Lenkwinkel zumindest teilweise durch den Fahrzeugführer vorgegeben wird, das Kraftfahrzeug also manuell in eine Kurve gelenkt wird. Im Rahmen einer teilautomatischen Fahrzeugführung, wie sie z. B. das Heading Control darstellt, wird eine Vielzahl fahrrelevanter Bedienvorgänge nicht mehr durch den Fahrzeugführer selbst, sondern durch Systeme des Kraftwagens ausgeführt. Die Systeme können beispielsweise korrigierend auf die Lenkvorgang durch den Fahrzeugführer einwirken und in kritischen Situationen eingreifen.

Vorzugsweise erfolgt in Schritt d) das Einstellen des wenigstens einen Aktors, welcher den Eingriff in die Lenkvorrichtung des Kraftwagens bewirkt, in Abhängigkeit von der festgelegten Sollquerneigung und/oder der in Schritt c) eingestellten Querneigung. Für jede vorgegebene Sollquerneigung kann eine geeignete Lenkaktoreinstellung vorgesehen sein, durch welche sich ein unerwünschtes Kurvenfahrverhalten des Kraftwagens bestmöglicht kompensieren lässt. Der funktionale Zusammenhang garantiert dann sehr gute Ergebnisse bei der Gierbewegungskompensation.

Vorzugsweise wird durch den wenigstens einen Aktor, welcher den Eingriff in die Lenkvorrichtung des Kraftwagens bewirkt, ein Überlagerungslenkwinkel eingestellt. Dann ist vorzugsweise vorgesehen, dass der Überlagerungslenkwinkel über eine mathematische Funktion und/oder eine Kennlinie aus der Sollquerneigung bzw. der eingestellten Querneigung ermittelt wird. Insbesondere kann der funktionale Zusammenhang dann so festgelegt sein, dass ein durch den wenigstens einen Aktor der aktiven Fahrwerksvorrichtung bewirkte zusätzliche Gierwinkel des Kraftwagens durch einen entgegengerichteten Überlagerungslenkwinkel zumindest teilweise kompensiert wird. Zweckmäßigerweise kann für alle möglichen, aktiv einstellbaren Wankwinkel bzw. Querneigungswinkel ein geeigneter kompensierender Überlagerungslenkwinkel vorgegeben sein. Damit ist eine sehr gute Kompensation bei vielen denkbaren Kurvenverläufen sichergestellt.

Vorzugsweise wird in Schritt a) eine zukünftige Querbeschleunigung des Kraftwagens über eine Vorrichtung zur automatischen Streckenvorausschau bestimmt und in Schritt b) die Sollquerneigung des Kraftwagens über diese Vorrichtung festgelegt. Für die automatische Streckenvorausschau können verschiedenste Eingangsparameter berücksichtigt werden. Beispielsweise kann anhand der momentanen Geschwindigkeit des Kraftwagens und dem aktuellen Lenkeinschlagswinkel die jeweilige Querbeschleunigung bestimmt werden. Es können auch Kartendaten vorliegen, aus denen der Fahrbahnverlauf hervorgeht. Dann kann beispielsweise über einen Satellitensignalsensor (z. B. GPS [Global Positioning System]-Sensor) die momentane Fahrzeugposition ermittelt werden und auf Basis des Kartenmaterials die zu erwartende Querbeschleunigung über die im Fahrzeugvorfeld liegenden Kurven bestimmt werden. Auch von einer Umfeldsensorik (z. B. Videokamera, Ultraschallsensoren etc.) gewonnene Daten können für die Streckenvorausschau herangezogen werden. Auch Daten zur Fahrbahnneigung können wichtige Eingangsparameter sein, um die zu erwartende Querbeschleunigung zu ermitteln. Mit einer solchen Vorrichtung zur automatischen Streckenvorausschau kann die Querneigung des Kraftwagens nicht erst in Reaktion auf eine aktuelle und zunächst zu messende Querbeschleunigung eingestellt werden, sondern die zu erwartenden Querbeschleunigungen können schon ermittelt werden, bevor sie überhaupt auftreten. Auf diese Weise kann die Querneigung schnell und ohne zeitlichen Verzug den jeweiligen Bedingungen optimal angepasst werden. Die Einstellung der Querneigung sowie die Eingriffe des Lenkaktors lassen sich so noch fließender und weniger abrupt gestalten, so dass der Fahrkomfort für die Kraftfahrzeuginsassen noch weiter erhöht wird.

Vorzugsweise kann für das Bestimmen der Querbeschleunigung in Verfahrensschritt a) auch ein Signal wenigstens eines Sensors herangezogen werden. Bei dem Sensor kann es sich insbesondere um einen Beschleunigungssensor (g-Sensor) handeln, der die jeweils momentane Querbeschleunigung misst. Solche Sensoren erlauben eine besonders exakte Bestimmung der jeweiligen Querbeschleunigung.

Besonders bevorzugt ist es, wenn in Schritt c) der wenigstens eine Aktor zum Beeinflussen der Querneigung des Kraftwagens in einem aktiven Federungssystem oder in einem aktiven Stabilisator bereitgestellt wird. Solche Federungs- bzw. Stabilisatorsysteme erlauben eine besonders dynamische Regelung der Fahrzeugneigung und ermöglichen eine schnelle und bedarfsgerechte Anpassung an die jeweilige Situation.

Eine erfindungsgemäße Vorrichtung dient zum Beeinflussen des Kurvenfahrverhaltens eines Kraftwagens. Sie umfasst eine Bestimmungsvorrichtung, welche dazu ausgebildet ist, eine Querbeschleunigung des Kraftwagens zu bestimmen und eine Sollquerneigung des Kraftwagens in Abhängigkeit von der bestimmten Querbeschleunigung festzulegen. Sie umfasst auch wenigstens einen Aktor einer aktiven Fahrwerksvorrichtung des Kraftwagens, welcher mit der Bestimmungsvorrichtung gekoppelt ist und dazu ausgebildet ist, die Querneigung des Kraftwagens so einzustellen, dass diese der von der Bestimmungsvorrichtung festgelegten Sollquerneigung entspricht. Schließlich umfasst die Vorrichtung auch wenigstens einen Aktor, welcher mit der Bestimmungsvorrichtung gekoppelt ist und dazu ausgebildet ist, einen Eingriff in eine Lenkvorrichtung des Kraftwagens so zu bewirken, dass eine durch ein Einstellen des wenigstens einen Aktors der aktiven Fahrwerksvorrichtung bewirkte Gierbewegung des Kraftwagens zumindest teilweise kompensiert wird. Weiterhin ist der Aktor ausgebildet, einen Eingriff in die Lenkvorrichtung des Kraftwagens so zu bewirken, dass einem ersten Lenkwinkel ein Überlagerungslenkwinkel so überlagert wird, dass der durch den resultierenden Lenkwinkel bewirkte Kurvenradius der Fahrkurve des Kraftwagens dem Kurvenradius der Fahrkurve des Kraftwagens entspricht, welcher sich ohne ein Einstellen des wenigstens einen Aktors der aktiven Fahrwerksvorrichtung bei dem ersten Lenkwinkel ergibt.

Ein erfindungsgemäßer Kraftwagen umfasst eine erfindungsgemäße Vorrichtung.

Die mit Bezug auf das erfindungsgemäße Verfahren dargestellten bevorzugten Ausführungsformen und deren Vorteile gelten entsprechend für die erfindungsgemäße Vorrichtung sowie den erfindungsgemäßen Kraftwagen.

Anhand von Ausführungsbeispielen wird die Erfindung im Folgenden näher erläutert. Es zeigen:
- Fig. 1: eine schematische Aufsicht auf einen Kraftwagen mit einer aktiven Fahrwerksvorrichtung sowie einem Aktor zum Beeinflussen der Lenkbewegung;
- Fig. 2: eine schematische Rückansicht eines Kraftwagens mit einer aktiven Fahrwerksvorrichtung;
- Fig. 3: eine schematische Aufsicht auf einen Kraftwagen mit drei möglichen Fahrwegen; und
- Fig. 4: eine schematische Darstellung einer Steuereinheit zur Ermittlung eines Überlagerungslenkwinkels.

In den Figuren sind gleiche oder funktionsgleiche Elemente mit den gleichen Bezugszeichen versehen.

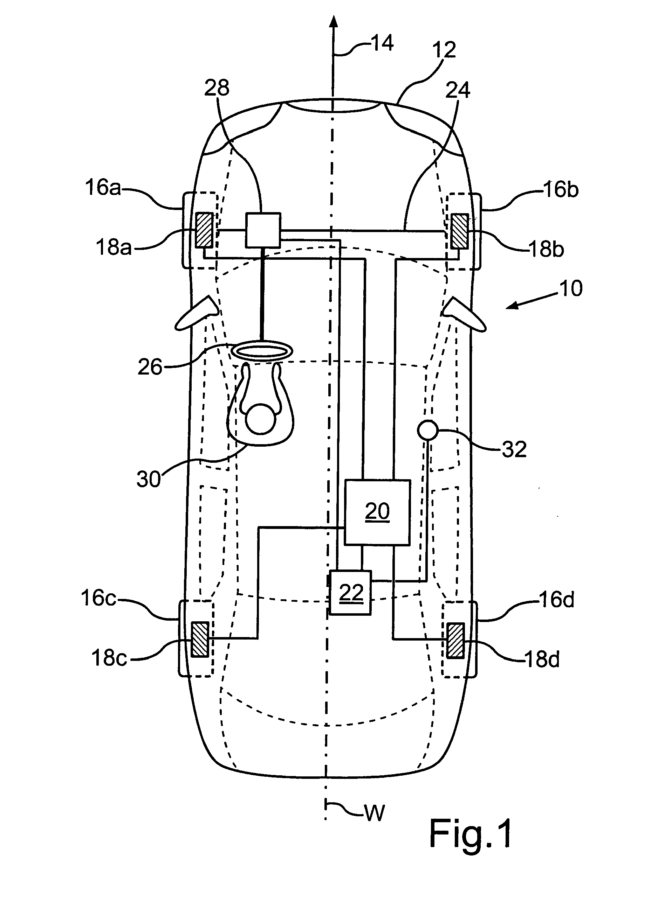

Fig. 1 zeigt einen Kraftwagen 10, der sich in einer durch den Pfeil 14 angegebenen Fahrtrichtung bewegt. In der Nähe seiner Frontseite 12 umfasst er zwei vordere Räder 16a und 16b. Diese sind über eine Vorderachse 24 miteinander verbunden. Der Kraftwagen 10 umfasst auch zwei hintere Räder 16c und 16d. Jedem der Räder 16a bis 16d ist jeweils ein Vertikalaktor 18a bis 18d zugeordnet, welche Teil einer ABC (Active Body Control)-Aktorik sind. Die Vertikalaktoren 18a bis 18d werden über eine ABC Steuereinheit 20 angesteuert. Hierdurch ist es möglich, den Hub jedes einzelnen Rades individuell einzustellen. Beispielsweise kann der Vertikalaktor 18a die vertikale Radstellung des Rades 16a beeinflussen. Die ABC Steuereinheit 20 ist mit einer Steuereinheit 22 verbunden, welche eine teilautomatische Fahrzeugführung regelt. Alternativ können die ABC Steuereinheit 20 sowie die Steuereinheit 22 auch Teil einer gemeinsamen Steuereinheit sein. Der Kraftwagen 10 umfasst auch einen Sensor 32, der es erlaubt, die momentane Querbeschleunigung des Kraftwagens 10 zu messen. Der Sensor 32 ist mit der Steuereinheit 22 verbunden und gibt die Messinformationen zur Querbeschleunigung an diese weiter.

Die vorderen Räder 16a und 16b sind über eine Lenkung 26 lenkbar, d. h. der Lenkwinkel b ist über die Lenkung 26 einstellbar. Die Lenkung 26 umfasst insbesondere ein Lenkrad, das von einem Fahrer 30 bedient werden kann. Neben dieser Form der manuellen Lenkung umfasst der Kraftwagen 10 auch einen Lenkaktor 28, mit dem der Lenkwinkel b der Räder 16a und 16b automatisch eingestellt werden kann. Hierzu ist der Lenkaktor 28 mit der Steuereinheit 22 verbunden. Insbesondere ist der Lenkaktor 28 so ausgebildet, dass einem vom Fahrer 30 über die Lenkung 26 eingestellten Lenkwinkel b ein Überlagerungslenkwinkel Δb überlagert werden kann, so dass sich ein resultierender Lenkwinkel b+Δb ergibt. Hierbei soll jedoch der Lenkradwinkel c des Lenkrads der Lenkung 26 weiterhin dem zum Lenkwinkel b korrespondierenden Winkel entsprechen. Der Fahrer 30 erhält dann keine haptische Rückmeldung am Lenkrad über den Überlagerungslenkwinkel Δb.

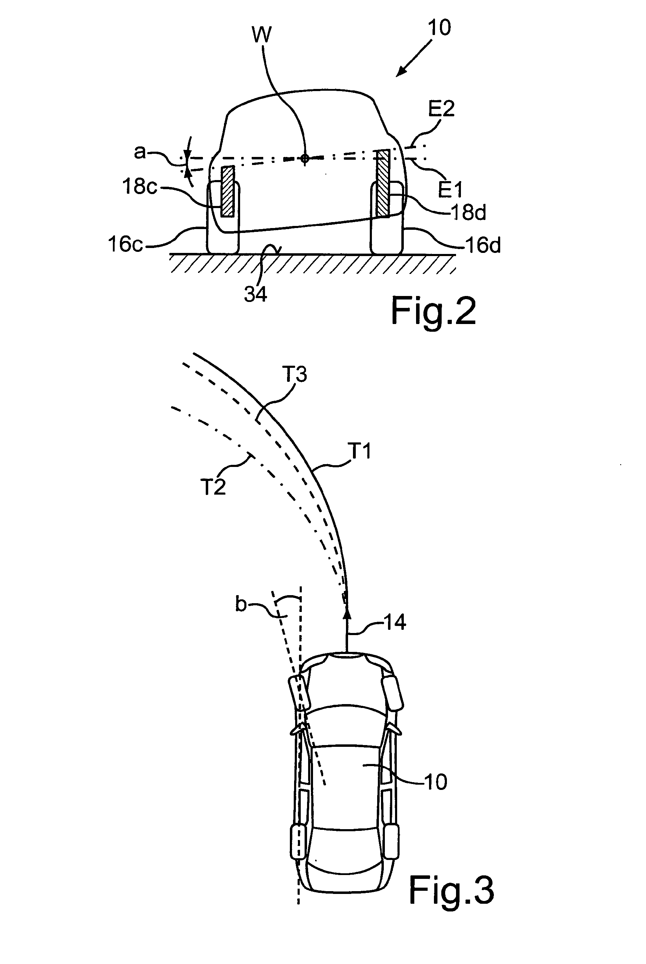

Fig. 2 zeigt eine schematische Rückansicht eines Kraftwagens 10 mit einer Wanksteuerung nach dem Stand der Technik. Der Kraftwagen 10 fährt im Ausführungsbeispiel ein Linkskurve. Um den Fahrkomfort für die Insassen des Kraftwagens 10 zu erhöhen, werden die Vertikalaktoren 18a bis 18d so angesteuert, dass sich die Karosserie des Kraftwagens 10 in die Linkskurve neigt. Die Neigung erfolgt durch eine Drehung um die Wandachse W. Diese verläuft parallel zu einer Fahrbahn 34. Bei Geradeausfahrt wirken keine Querkräfte auf den Kraftwagen 10, so dass seine Karosserie im Wesentlichen parallel zu einer Ebene E1 verläuft. Im Fall der Linkskurve wird nun die Karosserie über die Vertikalaktoren 18a bis 18d aktiv um einen Wankwinkel a geneigt. Die Karosserie verläuft dann im Wesentlichen parallel zu einer Ebene E2, die jedoch nicht mehr parallel zur Fahrbahn 34 verläuft. Die Ebene E2 schließt dann den Wankwinkel a mit der Ebene E1 ein. Durch das erreichte Sich-in-die-Kurve-Legen ist die vom Fahrer 30 empfundene Querbeschleunigung verbessert.

Fig. 3 zeigt drei mögliche Trajektorien T1, T2 und T3 auf der sich der Kraftwagen 10 bewegt, je nachdem welche die Fahrdynamik beeinflussenden Systeme aktiviert sind. Der Kraftwagen 10 durchfährt die Trajektorie T1, wenn vom Fahrer 30 der Lenkwinkel b eingestellt ist. Es findet in diesem Beispiel weder ein Sich-aktiv-in-die-Kurve-Neigen des Kraftwagens 10 (vgl. Fig. 2) noch ein aktiver Lenkeingriff über den Lenkaktor 28 statt.

Nun sei der in Fig. 2 dargestellte Fall betrachtet, dass sich der Kraftwagen 10 um den Wankwinkel a aktiv in die in Fig. 3 dargestellte Linkskurve neigt. Dann bewegt er sich trotz eingestellten Lenkwinkels b nicht mehr auf der Trajektorie T1, sondern auf der Trajektorie T2, welche enger ist, bzw. einen geringeren Kurvenradius aufweist als die Trajektorie T1. Das aktive Wanken verursacht ein eindrehendes Giermoment nach links. Der Gierwinkel des Kraftwagens 10 ist durch das aktive Wanken trotz gleich bleibenden Lenkwinkels b gegenüber dem zu Trajektorie T1 gehörenden Gierwinkel vergrößert. Dies entspricht dem aus dem Stand der Technik bekannten Fall. Um dennoch die Trajektorie T1 zu fahren muss der Fahrer 30 korrigierend in die Lenkung 26 eingreifen, indem er das Lenkrad weiter nach rechts bewegt, also den Lenkeinschlag zurücknimmt (d. h. den Lenkwinkel b reduziert). Das Fahrverhalten des Kraftwagens 10 erscheint dem Fahrer 30 deshalb als ungewöhnlich. Die Notwendigkeit des nach Rechts Zurücklenkens kann den Fahrer 30 überraschen und die Fahrsicherheit gefährden.

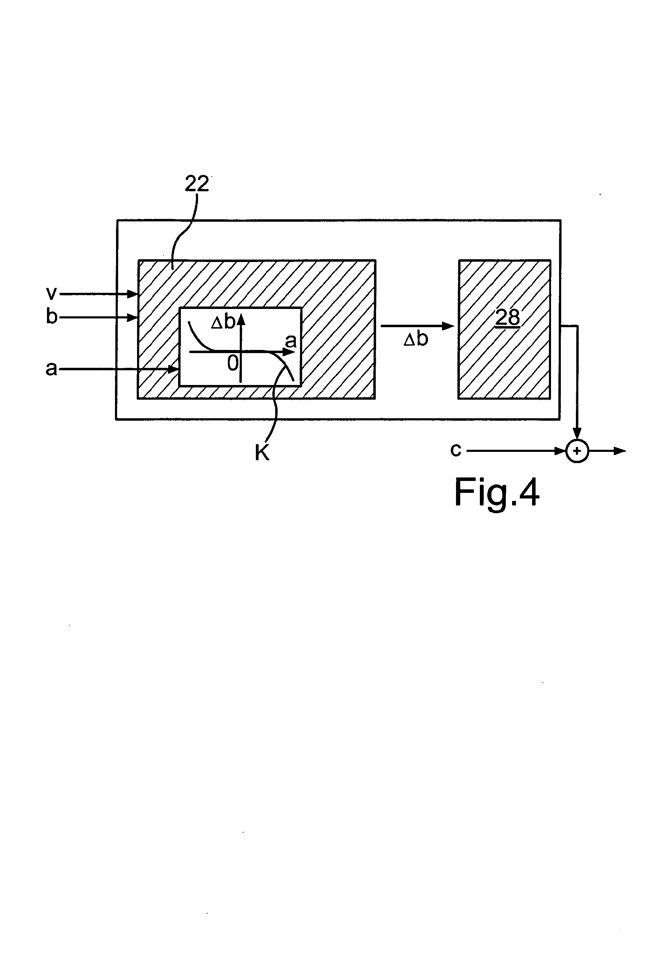

Deshalb ist nun vorgesehen, dass dieser korrigierende Lenkeingriff automatisch durchgeführt wird. Die Situation ist nochmals in Fig. 4 veranschaulicht. Die Steuereinheit 22 berechnet einen Überlagerungslenkwinkel Δb, welcher über den Lenkaktor 28 auf die Lenkung 26 appliziert wird und so einen effektiven Lenkwinkel b+Δb bewirkt. Der Lenkradwinkel c bleibt unverändert und behält den Wert, der zum Lenkwinkel b korrespondiert. Die Steuereinheit 22 verwendet für die Berechnung des Überlagerungslenkwinkels Δb mehrere Eingangsgrößen. Dies sind einerseits der Wankwinkel a, der Lenkwinkel b sowie ggf. die Geschwindigkeit v des Kraftwagens 10. Über einen funktionalen Zusammenhang in Form einer Kurve K sind der Überlagerungslenkwinkel Δb und der Wankwinkel a verknüpft. Ein Wankwinkel a von 5° bewirkt beispielsweise einen Überlagerungslenkwinkel Δb von -1°. Ein Wanken nach links führt zu einem Überlagerungslenkwinkel Δb nach rechts und vice versa.

Dies bewirkt, dass die tatsächlich vom Kraftwagen 10 gefahrene Trajektorie T3 rechts von der Trajektorie T2 verläuft. Der zu T3 gehörende Kurvenradius ist größer als jener, der zu T2 gehört. Idealerweise wird der Überlagerungslenkwinkel Δb so gewählt, dass die Trajektorien T1 und T3 zusammenfallen. Für den Fahrer 30 stellt sich das gewohnte Kurvenfahrverhalten des Kraftwagens 10 ein. Die Vorteile einer Verknüpfung von automatischem Wanken und automatischem Gegenlenken ergeben sich also besonders bei manueller Führung des Kraftwagens 10 bzw. im sogenannten Chauffeursbetrieb.

Das System aus Steuereinheit 22 und Lenkaktor 28 kann auch als Überlagerungslenkung bezeichnet werden und z. B. als ADS ausgebildet sein.

Um den Wankwinkel a einzustellen, erfasst die Steuereinheit 22 Signale des Sensors 32 und ermittelt aus diesen die Querbeschleunigung. In Abhängigkeit vom jeweiligen Wert der Querbeschleunigung bestimmt die Steuereinheit 22 nun eine geeignete Querneigung mit dem Wankwinkel a und einen geeigneten Überlagerungslenkwinkel Δb. Die Querneigung wird dadurch eingestellt, dass die Steuereinheit 22 Signale an die ABC Steuereinheit 20 weitergibt, wobei letztere wiederum den jeweiligen Hub der einzelnen Vertikalaktoren 18a bis 18d steuert. Der Überlagerungslenkwinkel wird andererseits dadurch eingestellt, dass die Steuereinheit 22 entsprechende Signale an den Lenkaktor 28 liefert, der in die Lenkung 26 so eingreift, dass ein bestimmter Lenkwinkel für die Räder 16a und 16b vorgegeben wird.

## Patentansprüche

1. Verfahren zum Beeinflussen des Kurvenfahrverhaltens eines Kraftwagens (10) mit den folgenden Schritten:
a) Bestimmen einer Querbeschleunigung des Kraftwagens (10);
b) Festlegen einer Sollquerneigung (a) des Kraftwagens (10) in Abhängigkeit von der in Schritt a) bestimmten Querbeschleunigung;
c) Einstellen wenigstens eines Aktors (18a, 18b, 18c, 18d) einer aktiven Fahrwerksvorrichtung des Kraftwagens (10), so dass der Kraftwagen (10) die in Schritt b) ermittelte Sollquerneigung (a) einnimmt; und
d) Einstellen wenigstens eines Aktors (28), welcher einen Eingriff in eine Lenkvorrichtung (26) des Kraftwagens (10) bewirkt, dergestalt, dass eine durch das Einstellen des wenigstens einen Aktors (18a, 18b, 18c, 18d) der aktiven Fahrwerksvorrichtung bewirkte Gierbewegung des Kraftwagens (10) zumindest teilweise kompensiert wird;
**dadurch gekennzeichnet, dass**
in Schritt d) durch das Einstellen des wenigstens einen Aktors (28), welcher den Eingriff in die Lenkvorrichtung (26) des Kraftwagens (10) bewirkt, einem ersten Lenkwinkel (b) ein Überlagerungslenkwinkel (Δb) so überlagert wird, dass der durch den resultierenden Lenkwinkel (b+Δb) bewirkte Kurvenradius der Fahrkurve (T3) des Kraftwagens (10) dem Kurvenradius der Fahrkurve (T1) des Kraftwagens (10) entspricht, welcher sich ohne das Einstellen des wenigstens einen Aktors (18a, 18b, 18c, 18d) der aktiven Fahrwerksvorrichtung bei dem ersten Lenkwinkel (b) ergeben hätte.

2. Verfahren nach Anspruch 1,
**dadurch gekennzeichnet, dass**
der erste Lenkwinkel (b) zumindest teilweise durch einen Fahrzeugführer (30) und/oder eine Vorrichtung zur teilautomatischen Fahrzeugführung (22), insbesondere eine Spurhalteunterstützungsvorrichtung, vorgegeben wird.

3. Verfahren nach einem der vorhergehenden Ansprüche,
**dadurch gekennzeichnet, dass**
in Schritt d) das Einstellen des wenigstens einen Aktors (28), welcher den Eingriff in die Lenkvorrichtung (26) des Kraftwagens (10) bewirkt, in Abhängigkeit von der festgelegten Sollquerneigung (a) und/oder der in Schritt c) eingestellten Querneigung erfolgt.

4. Verfahren nach Anspruch 3,
**dadurch gekennzeichnet, dass**
durch den wenigstens einen Aktor (28), welcher den Eingriff in die Lenkvorrichtung (26) des Kraftwagens (10) bewirkt, ein Überlagerungslenkwinkel (Δb) eingestellt wird und der Überlagerungslenkwinkel (Δb) über eine mathematische Funktion und/oder eine Kennlinie (K) aus der Sollquerneigung (a) bzw. eingestellten Querneigung ermittelt wird.

5. Verfahren nach einem der vorhergehenden Ansprüche,
**dadurch gekennzeichnet, dass**
in Schritt a) eine zukünftige Querbeschleunigung des Kraftwagens (10) über eine Vorrichtung (22) zur automatischen Streckenvorausschau bestimmt wird und in Schritt b) die Sollquerneigung (a) des Kraftwagens über die Vorrichtung (22) zur automatischen Streckenvorausschau festgelegt wird.

6. Verfahren nach Anspruch 5,
**dadurch gekennzeichnet, dass**
die Vorrichtung (22) zur automatischen Streckenvorausschau die zukünftige Querbeschleunigung anhand einer Geschwindigkeit (v) des Kraftwagens (10) und/oder anhand von Daten zum Fahrbahnverlauf und/oder anhand von Daten zur Fahrbahnneigung und/oder anhand einer Funktion für eine vorausschauende Längs- und Querführung bestimmt.

7. Verfahren nach einem der vorhergehenden Ansprüche
**dadurch gekennzeichnet, dass**
in Schritt a) für das Bestimmen der Querbeschleunigung ein Signal wenigstens eines Sensors (32) herangezogen wird.

8. Verfahren nach einem der vorhergehenden Ansprüche,
**dadurch gekennzeichnet, dass**
in Schritt c) der wenigstens eine Aktor (18a, 18b, 18c ,18d) zum Beeinflussen der Querneigung (a) des Kraftwagens (10) in einem aktiven Federungssystem oder in einem aktiven Stabilisator bereitgestellt wird.

9. Vorrichtung zum Beeinflussen des Kurvenfahrverhaltens eines Kraftwagens (10) mit
- einer Bestimmungsvorrichtung (22), welche dazu ausgebildet ist, eine Querbeschleunigung des Kraftwagens zu bestimmen und eine Sollquerneigung (a) des Kraftwagens (10) in Abhängigkeit von der bestimmten Querbeschleunigung festzulegen;
- wenigstens einem Aktor (18a, 18b, 18c, 18d) einer aktiven Fahrwerksvorrichtung des Kraftwagens (10), welcher mit der Bestimmungsvorrichtung (22) gekoppelt ist und dazu ausgebildet ist, die Querneigung (a) des Kraftwagens (10) so einzustellen, dass diese der von der Bestimmungsvorrichtung (22) festgelegten Sollquerneigung (a) entspricht; und
- wenigstens einem Aktor (28), welcher mit der Bestimmungsvorrichtung (22) gekoppelt ist und dazu ausgebildet ist, einen Eingriff in eine Lenkvorrichtung (26) des Kraftwagens (10) so zu bewirken, dass eine durch ein Einstellen des wenigstens einen Aktors (18a, 18b, 18c, 18d) der aktiven Fahrwerksvorrichtung bewirkte Gierbewegung des Kraftwagens (10) zumindest teilweise kompensiert wird;
**dadurch gekennzeichnet, dass**
der Aktor (28) dazu ausgebildet ist, einen Eingriff in die Lenkvorrichtung (26) des Kraftwagens (10) so zu bewirken, dass einem ersten Lenkwinkel (b) ein Überlagerungslenkwinkel (Δb) so überlagert wird, dass der durch den resultierenden Lenkwinkel (b+Δb) bewirkte Kurvenradius der Fahrkurve (T3) des Kraftwagens (10) dem Kurvenradius der Fahrkurve (T1) des Kraftwagens (10) entspricht, welcher sich ohne ein Einstellen des wenigstens einen Aktors (18a, 18b, 18c, 18d) der aktiven Fahrwerksvorrichtung bei dem ersten Lenkwinkel (b) ergibt.

10. Kraftwagen (10) mit einer Vorrichtung nach Anspruch 9.

## Claims

1. Method for influencing the cornering ability of a motor vehicle (10) having the following steps:
a) determining a lateral acceleration of the motor vehicle (10);
b) establishing a target lateral incline (a) of the motor vehicle (10) depending on the lateral acceleration determined in step a);
c) adjusting at least one actuator (18a, 18b, 18c, 18d) of an active chassis device of the motor vehicle (10) such that the motor vehicle (10) occupies the target lateral incline (a) determined in step b); and
d) adjusting at least one actuator (28) which causes an engagement with a steering device (26) of the motor vehicle (10), in such a way that a yaw of the motor vehicle (10) caused by adjusting the at least one actuator (18a, 18b, 18c, 18d) of the active chassis device is at least partially compensated for;
**characterised in that**
in step d), an overlapping steering angle (Δb) overlaps a first steering angle (b) by adjusting the at least one actuator (28) which causes the engagement with the steering device (26) of the motor vehicle (10), such that the curve radius of the drive curve (T3) of the motor vehicle (10) caused by the resulting steering angle (b+Δb) corresponds to the curve radius of the drive curve (T1) of the motor vehicle (10) which would have resulted without adjusting the at least one actuator (18a, 18b, 18c, 18d) of the active chassis device for the first steering angle (b).

2. Method according to claim 1,
**characterised in that**
the first steering angle (b) is at least partially provided by a vehicle driver (30) and/or a device for semi-automatic vehicle guidance (22), in particular a lane-keeping support device.

3. Method according to any one of the preceding claims,
**characterised in that**
in step d), the adjusting of the at least one actuator (28) which causes the engagement with the steering device (26) of the motor vehicle (10) occurs depending on the established target lateral incline (a) and/or the lateral incline adjusted in step c).

4. Method according to claim 3,
**characterised in that**
an overlapping steering angle (Δb) is adjusted by the at least one actuator (28) which causes the engagement with the steering device (26) of the motor vehicle (10), and the overlapping angle (Δb) is determined from the target lateral incline (a) or adjusted lateral incline via a mathematical function and/or a characteristic curve (K).

5. Method according to any one of the preceding claims,
**characterised in that**
in step a), a future lateral acceleration of the motor vehicle (10) is determined via a device (22) for automatic route preview, and in step b), the target incline (a) of the motor vehicle is established via the device (22) for automatic route preview.

6. Method according to claim 5,
**characterised in that**
the device (22) for automatic route preview determines the future lateral acceleration by means of a speed (v) of the motor vehicle (10) and/or by means of data regarding the road course and/or by means of data regarding the road incline and/or by means of a function for an anticipatory longitudinal or lateral guidance.

7. Method according to any one of the preceding claims,
**characterised in that**
in step a), a signal of at least one sensor (32) is used for determining the lateral acceleration.

8. Method according to any one of the preceding claims,
**characterised in that**
in step c), the at least one actuator (18a, 18b, 18c, 18d) is provided in an active suspension system or in an active stabiliser for influencing the lateral incline (a) of the motor vehicle (10).

9. Device for influencing the cornering ability of a motor vehicle (10), having
- a determination device (22) which is configured to determine a lateral acceleration of the motor vehicle and to establish a target lateral incline (a) of the motor vehicle (10) depending on the determined lateral acceleration;
- at least one actuator (18a, 18b, 18c, 18d) of an active chassis device of the motor vehicle (10) which is coupled to the determination device (22) and is configured to adjust the lateral incline (a) of the motor vehicle (10) such that this corresponds to the target lateral incline (a) established by the determination device (22); and
- at least one actuator (28) which is coupled to the determination device (22) and is configured to cause an engagement with a steering device (26) of the motor vehicle (10) such that a yaw of the motor vehicle (10) caused by adjusting the at least one actuator (18a, 18b, 18c, 18d) of the active chassis device is at least partially compensated for;
**characterised in that**
the actuator (28) is configured to cause an engagement with the steering device (26) of
the motor vehicle (10) such that an overlapping steering angle (Δb) overlaps a first steering angle (b) such that the curve radius of the drive curve (T3) of the motor vehicle (10) caused by the resulting steering angle (b+Δb) corresponds to the curve radius of the drive curve (T1) of the motor vehicle (10) which results without adjusting the at least one actuator (18a, 18b, 18c, 18d) of the active chassis device for the first steering angle (b).

10. Motor vehicle (10) having a device according to claim 9.

## Revendications

1. Procédé pour influencer le comportement de conduite dans les virages d'un véhicule à moteur (10), comprenant les étapes suivantes consistant à :
a) déterminer une accélération transversale du véhicule à moteur (10) ;
b) fixer une inclinaison transversale théorique (a) du véhicule à moteur (10) en fonction de l'accélération transversale définie à l'étape a) ;
c) régler au moins un actionneur (18a, 18b, 18c, 18d) d'un dispositif de train de roulement actif du véhicule à moteur (10) de sorte que le véhicule à moteur (10) adopte l'inclinaison transversale théorique (a) déterminée à l'étape b) ; et
d) régler au moins un actionneur (28), qui entraîne une prise avec un dispositif de braquage (26) du véhicule à moteur (10) de telle manière qu'un mouvement d'embardée, provoqué par le réglage de l'au moins un actionneur (18a, 18b, 18c, 18d) du dispositif de train de roulement actif, du véhicule à moteur (10) est compensé au moins en partie ;
**caractérisé en ce**
**qu'**un angle de braquage de superposition (Δb) est superposé, à l'étape d), du fait du réglage de l'au moins un actionneur (28), qui provoque la prise avec le dispositif de braquage (26) du véhicule à moteur (10), à un premier angle de braquage (b) de telle sorte que le rayon de courbe, provoqué par l'angle de braquage (b+Δb) en résultant, du virage (T3) du véhicule à moteur (10) correspond au rayon de courbe du virage (T1) du véhicule à moteur (10), lequel aurait été produit sans le réglage de l'au moins un actionneur (18a, 18b, 18c, 18d) du dispositif de train de roulement actif pour le premier angle de braquage (b).

2. Procédé selon la revendication 1,
**caractérisé en ce**
**que** le premier angle de braquage (b) est spécifié au moins en partie par un conducteur de véhicule (30) et/ou par un dispositif pour le guidage en partie automatique de véhicule (22), en particulier un dispositif d'assistance au maintien dans une voie de circulation.

3. Procédé selon l'une quelconque des revendications précédentes,
**caractérisé en ce**
**que** le réglage de l'au moins un actionneur (28), qui provoque la prise avec le dispositif de braquage (26) du véhicule à moteur (10), est effectué, à l'étape d), en fonction de l'inclinaison transversale théorique (a) fixée et/ou de l'inclinaison transversale réglée à l'étape c).

4. Procédé selon la revendication 3,
**caractérisé en ce**
**qu'**un angle de braquage de superposition (Δb) est réglé par l'au moins un actionneur (28), qui provoque la prise avec le dispositif de braquage (26) du véhicule à moteur (10), et que l'angle de braquage de superposition (Δb) est déterminé par l'intermédiaire d'une fonction mathématique et/ou d'une courbe caractéristique (K) à partir de l'inclinaison transversale théorique (a) ou de l'inclinaison transversale réglée.

5. Procédé selon l'une quelconque des revendications précédentes,
**caractérisé en ce**
**qu'**à l'étape a), une accélération transversale future du véhicule à moteur (10) est définie par l'intermédiaire d'un dispositif (22) pour l'anticipation d'itinéraire automatique, et qu'à l'étape b), l'inclinaison transversale théorique (a) du véhicule à moteur est fixée par l'intermédiaire du dispositif (22) pour l'anticipation d'itinéraire automatique.

6. Procédé selon la revendication 5,
**caractérisé en ce**
**que** le dispositif (22) pour l'anticipation d'itinéraire automatique définit l'accélération transversale future à l'aide d'une vitesse (v) du véhicule à moteur (10) et/ou à l'aide de données portant sur le profil de chaussée et/ou à l'aide de données portant sur l'inclinaison de chaussée et/ou à l'aide d'une fonction pour un guidage longitudinal et transversal anticipé.

7. Procédé selon l'une quelconque des revendications précédentes,
**caractérisé en ce**
**qu'**à l'étape a), un signal d'au moins un capteur (32) est pris en compte pour la définition de l'accélération transversale.

8. Procédé selon l'une quelconque des revendications précédentes
**caractérisé en ce**
**qu'**à l'étape c), l'au moins un actionneur (18a, 18b, 18c, 18d) est fourni afin d'influencer l'inclinaison transversale (a) du véhicule à moteur (10) dans un système de suspension actif ou dans un stabilisateur actif.

9. Dispositif pour influencer le comportement de conduite dans les virages d'un véhicule à moteur (10), comprenant
- un dispositif (22) de définition, qui est réalisé afin de définir une accélération transversale du véhicule à moteur et afin de fixer une inclinaison transversale théorique (a) du véhicule à moteur (10) en fonction de l'accélération transversale définie ;
- au moins un actionneur (18a, 18b, 18c, 18d) d'un dispositif de train de roulement actif du véhicule à moteur (10), qui est couplé au dispositif (22) de définition et qui est réalisé afin de régler l'inclinaison transversale (a) du véhicule à moteur (10) de telle manière que cette dernière correspond à l'inclinaison transversale théorique (a) fixée par le dispositif (22) de définition ; et
- au moins un actionneur (28), qui est couplé au dispositif (22) de définition et qui est réalisé afin de provoquer une prise avec un dispositif de braquage (26) du véhicule à moteur (10) de telle sorte qu'un mouvement d'embardée, provoqué par un réglage de l'au moins un actionneur (18a, 18b, 18c, 18d) du dispositif de train de roulement actif, du véhicule à moteur (10) est compensé au moins en partie ;
**caractérisé en ce**
**que** l'actionneur (28) est réalisé afin de provoquer une prise avec le dispositif de braquage (26) du véhicule à moteur (10) de telle sorte qu'un angle de braquage de superposition (Δb) est superposé à un premier angle de braquage (b) de telle sorte que le rayon de courbe, provoqué par l'angle de braquage (b+Δb) en résultant, du virage (T3) du véhicule à moteur (10) correspond au rayon de courbe du virage (T1) du véhicule à moteur (10), lequel est produit sans un réglage de l'au moins un actionneur (18a, 18b, 18c, 18d) du dispositif de train de roulement actif pour le premier angle de braquage (b).

10. Véhicule à moteur (10) comprenant un dispositif selon la revendication 9.
